# EUROPEAN PATENT SPECIFICATION

(11) **EP 3 846 652 B1**
(45) Date of publication and mention of the grant of the patent: **18.03.2026**
(21) Application number: 19858508.5
(22) Date of filing: 04.09.2019
(51) Int. Cl.: A42B 3/04, G02B 23/12, F41H 1/04, G02B 27/01

(54) **OPERATIONAL MODE SENSING SWITCH SYSTEM AND MULTI-ORIENTATED MOUNTING SYSTEM FOR A HELMET MOUNTED NIGHT VISION DEVICE**
SCHALTVORRICHTUNG MIT BETRIEBSMODUSERFASSUNG UND MULTIORIENTIERTES MONTAGESYSTEM FÜR EINE HELMMONTIERTE NACHTSICHTVORRICHTUNG
SYSTÈME DE COMMUTATEUR DE DÉTECTION DE MODE DE FONCTIONNEMENT ET SYSTÈME DE MONTAGE MULTI-ORIENTÉ POUR UN DISPOSITIF DE VISION NOCTURNE MONTÉ SUR UN CASQUE

(30) Priority: 04.09.2018 AU 2018903281
(43) Date of publication of application: 14.07.2021
(73) Proprietor: Designworks Defence Systems Pty Ltd, West End, Queensland 4101 (AU)
(72) Inventor: SCHRODER, Warren, Auchenflower, Queensland 4066 (AU); WALL, Alexander, West End, Queensland 4101 (AU)
(74) Representative: Hörschler, Wolfram Johannes
(86) International application number: PCT/AU2019/050947
(87) International publication number: WO 2020/047598

(56) References cited:
- WO-A1-95/07489
- AU-A1- 2013 242 851
- US-A- 5 506 730
- US-A1- 2002 120 979
- US-A1- 2002 120 979
- US-A1- 2007 075 918
- US-A1- 2008 263 752
- US-A1- 2011 239 354
- US-A1- 2015 323 777
- US-B1- 8 209 780

## Description

### TECHNICAL FIELD

The present invention relates to mounting assemblies for enhanced night vision goggles (ENVG), and more particularly to a switch system and mounting system for a single or dual ENVG.

### BACKGROUND ART

Night vision devices are commonly used by military personnel for conducting operations in low light and night conditions. These night vision devices typically include image intensifier tubes and associated optics that convert infrared and near infrared light into viewable images.

Assemblies for mounting night vision goggles to a helmet or other headpieces are well known in the art. The mounting assemblies allow a user's hands to remain free while viewing a scene through the night vision goggles. Prior art mounting assemblies typically include one or more of the following features: positional adjustment of the night vision goggles between an in-use position and a flip-up stowed position; a quick release system for detachment of ENVG from the mount; and semi-automatic shutdown of an attached ENVG.

Preferred assemblies for mounting night vision goggles to a helmet provide for the goggles to be attached to the helmet in a manner that allows a user to view a scene through the goggles without having to hold the goggles. Some of the prior mounting assemblies allow the user to reposition the mounting assembly and attached ENVG so that when a night vision device is not needed, such as in well-lit surroundings, the ENVG can be stowed while remaining attached to the helmet.

Some prior art devices include a semi-automatic shutdown feature that turns the ENVG off when repositioned to the stowed position. Some devices utilise a magnetic switch in the semi-automatic shutdown, but these are limited in their operational aspects because, amongst other reasons, the user can falsely trigger the magnetic switch by looking up towards the sky while the ENVG is in the in-use position or by looking down when the ENVG is in the stowed position. This is a considerable disadvantage as the user is unable to see with the ENVG while looking up beyond a certain angle. It is also a disadvantage as the ENVG produces a viewable image by emitting visible light for the user when switched on and the user's position can be given away to the enemy when the ENVG is falsely turned on while in the stowed position on the user's helmet. This is a particularly serious issue for soldiers using ENVG.

While known mounting assemblies try to overcome this issue with specially shaped cavities for a magnet to travel in, or electronic sensors placed within the ENVG, it can be difficult to automatically distinguish the operational mode (*i.e.* in-use or stowed) of the ENVG.

An example of a prior art mounting assembly for night vision devices can be seen in U.S. Patent No. 6,862,748 to Prendergast. Prendergast discloses a module with an L-shaped cavity for a magnet to move in. The magnet moves by gravity from one end of the cavity to the other when repositioning the ENVG from an in-use position to a stowed position and activates a magnetic reed switch on the ENVG, turning the unit off. However, the magnet may also move from one end of the cavity to the other when the user looks up beyond a certain angle.

A further example of a prior art mounting assembly for night vision devices can be seen in U.S. Patent No. 8,497,465 to Hammond. Hammond disclosed an electronic orientation sensing switch system that uses accelerometers and gyroscopes to distinguish the position of the ENVG and adjust the power state of the ENVG accordingly. False activation of the switch can still occur if the user is required to look up or down beyond a preset angle.

US 2011/0239354 A1 is related to a helmet mounting system and a mounting shoe interface. An improved helmet mounting device for an optical or other viewing device is provided. The helmet mount includes a mounting assembly removable attachable to the helmet and a pivoting assembly having a first end pivotally attached to the mounting assembly and a second end opposite the first end. A fore and aft adjustment assembly is attached to the second end of the pivoting assembly and a left and right adjustment assembly is rotatably attached to the fore and aft adjustment assembly. The left and right adjustment assembly is pivotal relative to the fore and aft adjustment assembly about a first generally vertical axis. An optical device mounting member is attached to the left and right adjustment assembly. The optical device mounting member is removably attachable to the optical device. The mounting assembly includes a vertical adjustment mechanism which has a base plate, a pair of guide rails attached to a base plate and defining a channel therebetween, a sliding plate slidably attached to the guide rails, and a clamping mechanism for selectively applying a clamping force to secure the sliding plate at a desired position relative to said base plate. In further aspects, modular electrical connectors and a remote battery box for providing power to the optical device or other viewing device are provided.

It would be desirable to have the ability to distinguish if the ENVG is placed in an in-use position or in a stowed position with a higher degree of accuracy, and without limiting a user's visual range.

Known mounting assemblies also typically have a removable carriage that detaches from the main assembly. The ENVG is mounted to the removable carriage such that the ENVG can be removed from the helmet when not in use for extensive periods of time and stored more securely. The main assembly can remain attached to the helmet block for quick reattachment of the ENVG. The carriage assembly is usually slidably connected to the main assembly in a double dovetail interface, wherein a pair of parallel ridges in the carriage slidably engage a pair of recesses in the main assembly.

In some prior mounting assemblies only one eyepiece monocular ENVG can be attached. A user must preselect if the left or right eye is preferred. While some mounting systems allow the ENVG to be mounted on the left or right side, often additional parts or tools are required to swap sides. It would therefore be desirable if the monocular mounting assembly could be used for both left and right eyes, and be easily swapped between left and right in the field.

### SUMMARY OF INVENTION

The present invention is directed to a helmet mounting assembly for enhanced night vision goggles, which may at least partially overcome at least one of the abovementioned disadvantages or provide the consumer with a useful or commercial choice. More particularly, the helmet mounting assembly according to the present invention is designed to allow for automatic shutoff of an attached ENVG when stowed, and automatic activation of an ENVG when returned to the in-use position.

With the foregoing in view, the present invention in one form, resides broadly in an automatic shutdown assembly for automatically shutting down a night vision device when it is not in the in-use position.

In a first aspect, the invention provides a flip-up helmet mount for an enhanced night vision goggle (ENVG) comprising (i) a helmet block adapted to secure the flip-up helmet mount to a helmet; (ii) a bracket member coupled to the helmet block and comprising an automatic shutoff mechanism; (iii) a carriage chassis coupled to the bracket member, wherein the carriage chassis is adapted to receive an ENVG; and (iv) a hinged pivot assembly associated with the carriage chassis, wherein the bracket member provides for rotational coupling between the carriage chassis and the helmet block, wherein the hinged pivot assembly enables the ENVG to be moved from a stowed position to an in-use position, and wherein the automatic shutoff mechanism comprises a magnet module.

The automatic shutdown assembly comprises a magnet module that is positioned on the bracket member. The magnet module comprises a magnet and a magnetically-responsive sensor.

The magnetically-responsive sensor can comprise a sensor or reed switch. The position of the sensor is such that it aligns with the magnet when the carriage chassis is repositioned from the in-use to the stowed position and is close enough in proximity for the magnet to activate the sensor. The sensor must also be far enough away from the magnet when in the in-use position such that it is not activated by the magnet.

Alternatively, the position of the magnet is such that it aligns with the sensor when the carriage chassis is in an in-use position and thus activates the ENVG. In this alternative, when the ENVG is in a stowed position, the sensor and magnet are far enough away from each other so that the ENVG is shutdown.

In certain embodiments, the magnet is associated with one side of the bracket member and the magnetically-responsive sensor is associated with the opposite side of the bracket member. Positioning both the magnet and the magnetically-responsive sensor on opposite sides of the bracket member provides for a higher degree of accuracy in responding to the ENVG being in an in-use position or a stowed position. Advantageously, such a positioning of the magnet and the magnetically-responsive sensor does not limit the head movements of the user.

In some embodiments, the magnet can be attached to one end of a Bowden cable. The Bowden cable can be associated with, or attached to, the hinged pivot assembly such that movement of the ENVG actuates the cable and attached magnet. When the ENVG is moved to a stowed position, the magnet is pushed by the Bowden cable to align with the sensor or reed switch, thus activating shutdown of the ENVG. Conversely, when the ENVG is moved to an in-use position, the magnet is pulled by the Bowden cable out of the field of the sensor or reed switch, thus activating the ENVG.

Alternatively, the magnet and Bowden cable can be associated with, or attached to, the hinged pivot assembly such that when the ENVG is moved to a stowed position, the magnet is pulled by the Bowden cable out of the field of the sensor or reed switch, thus activating shutdown of the ENVG. Conversely, when the ENVG is moved to an in-use position, the magnet is pushed by the Bowden cable to align with the sensor or reed switch, thus activating the ENVG.

In alternative embodiments, the magnet can be replaced with other proximity sensors.

A mechanical switch or an electronic switch such as a reed switch could be associated with, or attached to, the hinged pivot assembly and connected to cables or wires connected to contact pads inside the carriage assembly proximate the ENVG connection to the carriage chassis. Reciprocal contact pads on the ENVG make an electronic connection between the mount and the ENVG to form a switching loop. Thus, when the ENVG is in a stowed position, the switch is open and the ENVG is off, and conversely when the ENVG is in an in-use position, the switch is closed, thus activating the ENVG. Alternatively, the

The helmet mount can further comprise a mode selection switch, wherein the modes that can be selected comprise 'on' or 'off', with 'on' corresponding to enabling automatic shutdown, and 'off' corresponding to disabling automatic shutdown. Thus, the magnet module operates to automatically shutdown the night vision device whenever it is not in the in-use position, and the appropriate switch selection ('on') is made on the ENVG.

In a further embodiment, rotating the carriage chassis from the in-use position to the stowed position moves the magnet towards the sensor to increase the proximity of the magnet module to the sensor in the stowed position, thereby activating shutdown of the ENVG.

In a further alternative embodiment, the magnet can be positioned on the carriage chassis to increase the proximity of the magnet to the sensor.

In a further alternative embodiment, the sensor can be located in the carriage chassis. The sensor can be coupled to the ENVG through conductive pins or similar means and send its magnetic activation to the ENVG.

In a further alternative embodiment, the magnet can be positioned in the carriage chassis or ENVG, and the sensor positioned in the bracket member. The sensor can be powered by an external power supply or battery, with the battery not located in the ENVG. Advantageously with this embodiment, the weight of the power supply is removed from the ENVG and positioned closer to the spine, reducing fatigue on the user. The external battery could also power the ENVG.

Positioning of the magnet in relation to the sensor as described, produces a reliable automatic shutdown assembly that senses the proximity of the bracket member or carriage chassis and ENVG, irrespective of the orientation of the user's viewing angle. This leads to greater accuracy in distinguishing the operational mode (*i.e.,* in use or stowed).

The carriage chassis is removably secured into a receiving socket on the bracket member, thereby providing for quick separation of the carriage chassis from the bracket member and thus rapid removal of the ENVG from the helmet.

In a second aspect, not forming part of the invention provides a flip-up helmet mount for an enhanced night vision goggle (ENVG) comprising (i) a helmet block adapted to secure the flip-up helmet mount to a helmet; (ii) a bracket member coupled to the helmet block; (iii) a carriage chassis coupled to the bracket member; (iv) a hinged pivot assembly associated with the carriage chassis; and (v) a bridge assembly coupled to the carriage chassis, wherein the bracket member provides for rotational coupling between the carriage chassis and the helmet block, wherein the hinged pivot assembly enables the ENVG to be moved from a stowed position to an in-use position, and wherein the coupling between the bridge assembly and the carriage chassis enables a monocular ENVG to be attached for either right eye or left eye viewing.

In one embodiment, the coupling between the bridge assembly and the carriage chassis comprises a moveable dovetail plate that couples into a corresponding receiving socket of the carriage chassis.

In use, the ENVG is removably secured to the helmet mount via coupling of the dovetail plate on the bridge assembly and the receiving socket of the carriage chassis. The bridge assembly can be uncoupled from the carriage chassis, rotated horizontally by 180 degrees and recoupled to the carriage chassis, thereby switching a monocular ENVG from either left or right eye viewing to the other side. Horizontal rotation of the ENVG by 180 degrees is also required to ensure the eyepiece of the ENVG is correctly positioned against the user's eye.

The dovetail plate is symmetrical such that it can be secured into the corresponding receiving socket in multiple orientations. Advantageously, the dovetail plate does not need to be removed from the bridge assembly, and therefore no tools are required by the user in order to convert a monocular ENVG from right eye viewing to left eye viewing.

### BRIEF DESCRIPTION OF DRAWINGS

The invention may take form in various components and arrangements of components, and in various steps and arrangement of steps. The drawings are only for purposes of illustrating preferred embodiments and are not to be construed as limiting the invention.

Preferred features, embodiments and variations of the invention may be discerned from the following Detailed Description which provides sufficient information for those skilled in the art to perform the invention. The Detailed Description is not to be regarded as limiting the scope of the preceding Summary of the Invention in any way. The Detailed Description will make reference to a number of drawings as follows:
FIG. **1** is a perspective schematic view of a helmet with an associated ENVG device using a helmet mount system according to an embodiment of the invention wherein the ENVG is in the in-use position.
FIG. **2** is an enlarged view of the helmet mount system shown in FIG. **1** wherein the helmet is not shown and the system is in the in-use position.
FIG. **3** is an exploded perspective view of the helmet mount system shown in FIG. **2** in the in-use position.
FIG. **4** is a perspective schematic view of a helmet mount system according to an embodiment of the invention in the stowed position, wherein the helmet is not shown.
FIG. **5** is a perspective schematic side view of a helmet mount system according to an embodiment of the invention in the stowed position.
FIG. **6** is a schematic exploded perspective view of a helmet mount system with an automatic shutdown assembly according to an embodiment of the invention.
FIG. **7** is a schematic side view of a helmet mount system with an automatic shutdown assembly according to an embodiment of the invention in the in-use position.
FIG. **8** is a schematic side view of helmet mount system with an automatic shutdown assembly according to an embodiment of the invention in the stowed position.
FIG. **9** is a schematic side view of a helmet mount system with an automatic shutdown assembly according to an embodiment of the invention in the in-use position.
FIG. **10** is a schematic side view of a helmet mount system with an automatic shutdown assembly according to an embodiment of the invention in the stowed position.
FIG. **11** is a perspective schematic view of a helmet with an associated monocular ENVG device using a helmet mount system wherein the ENVG is in a position for viewing with the right eye of a user.
FIG. **12** is a perspective schematic view of a helmet with an associated monocular ENVG device using a helmet mount system wherein the ENVG is in a position for viewing with the left eye of a user.
FIG. **13** is a schematic exploded perspective view of the helmet mounting system and ENVG shown in Fig. **12****.**
FIG. **14** is an enlarged view of the helmet mount system and ENVG shown in FIG. **11** wherein the helmet is not shown.
FIG. **15** is a schematic top view of a helmet mount system and ENVG.
FIG. **16** is a schematic front view of a helmet mount system and ENVG.
FIG. **17** is a schematic top view of a dual sided dovetail plate.
FIG. **18** is a schematic bottom view of a dual sided dovetail plate.
FIG. **19** is a schematic perspective view of a dual sided dovetail plate.
Fig. **20** is a schematic side perspective view of a helmet mount system with an automatic shutdown assembly according to an embodiment of the invention in the in-use position.
FIG. **21** is a schematic side view of helmet mount system with an automatic shutdown assembly according to an embodiment of the invention in the in-use position.
FIG. **22** is a schematic side perspective view of a helmet mount system with an automatic shutdown assembly according to an embodiment of the invention in the stowed position.
FIG. **23** is a schematic side view of a helmet mount system with an automatic shutdown assembly according to an embodiment of the invention in the stowed position.

### DESCRIPTION OF EMBODIMENTS

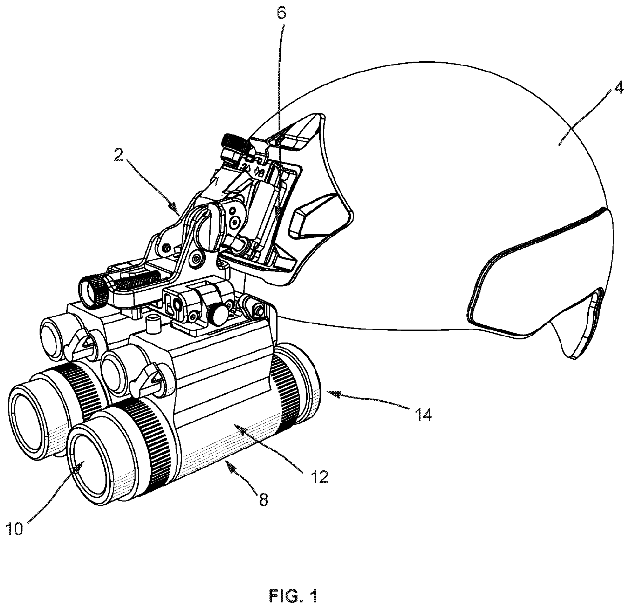

Referring now to **FIG. 1****,** **2****,** **3****,** **4** and **5****,** an embodiment of a flip-up helmet mount **2** according to the present invention is shown. The flip-up helmet mount **2** is shown in use with a standard composite helmet with a Visual Augmentation System (VAS) shroud **4.** The flip-up helmet mount **2** is attached to the helmet **4** by a helmet block **6.** A pair of enhanced night vision goggles (ENVG) **8** are secured to the helmet **4** by use of the flip-up helmet mount **2.** Each ENVG **8** shown in **FIG. 1** is a device that includes a single objective lens **10,** a ENVG housing **12,** and an eye-piece **14.** The ENVG **8** is attached individually to the helmet mount **2** by a carriage chassis **18,** which is mounted to a bracket member **16.** The bracket member **16** comprises a bracket member upper **20** and a bracket member lower **22** which can rotate around the bracket member hinge **24.** To use the ENVG **8,** the operator places it in the position depicted in **FIG. 1** and looks into the eye-pieces **14** to see an enhanced image representative of the low-level light from a night scene which has entered the objective lens **10.**

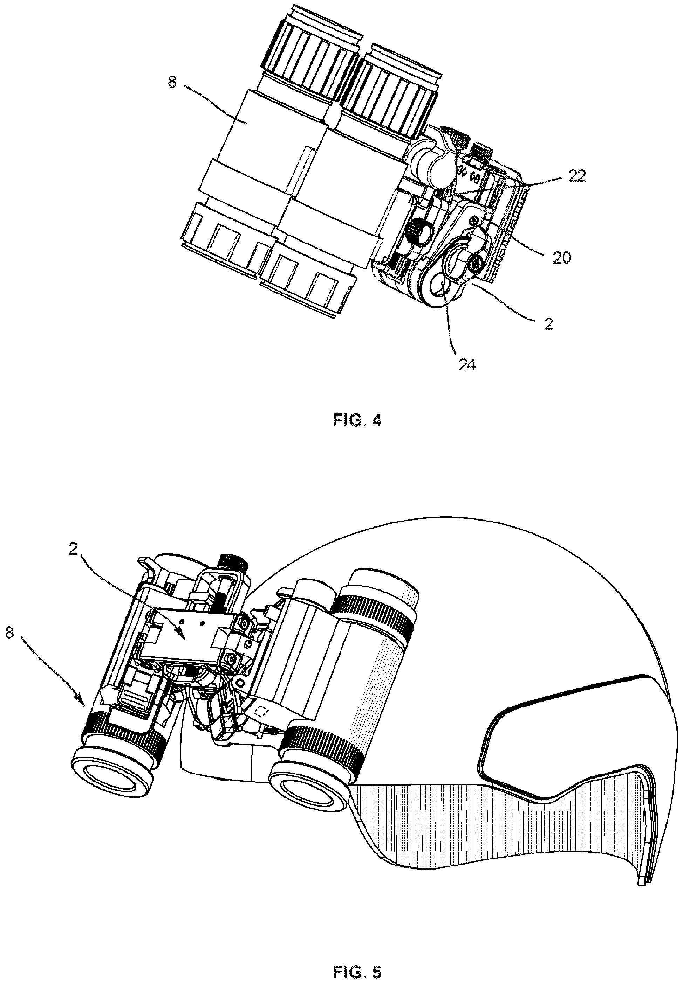

As shown in **FIG. 1****,** the ENVG **8** is positioned to be in front of the operator's eyes so that the operator may look through the eye-pieces **14** of the ENVG **8.** This position is referred to as the "in-use" position. However, the flip-up helmet mount **2** also allows the operator to rotate the bracket member lower **22** around the bracket member hinge **24,** allowing the operator to stow the ENVG **8** completely above the line of sight of the operator, to permit normal, unobstructed vision as depicted in **FIG. 4** and **5****.** This position is referred to as the "stowed" position.

### Automatic Shut Down Assembly

The flip-up helmet mount **2** provides for automatic shutdown of the ENVG **8** when in the stowed position. More particularly, the flip-up helmet mount **2** provides for reliable and automatic shutdown of the night vision device **8.** Accordingly, the flip-up helmet mount **2** provides for automatic activation of the ENVG **8** when in the in-use position. Furthermore, the flip-up helmet mount **2** provides for maintenance and servicing of the automatic shutdown assembly in the field.

As is well known in the art, the night vision goggle **8** includes a power supply in the form of a battery pack (not shown) internal to the housing **12** or remotely on the rear of the helmet **4.** A power supply circuit provides power to an image intensifier tube (not shown), which supplies an intensified image in phosphor yellow/green light of the scene viewed by the objective lens **10** to the eye-pieces **14.**

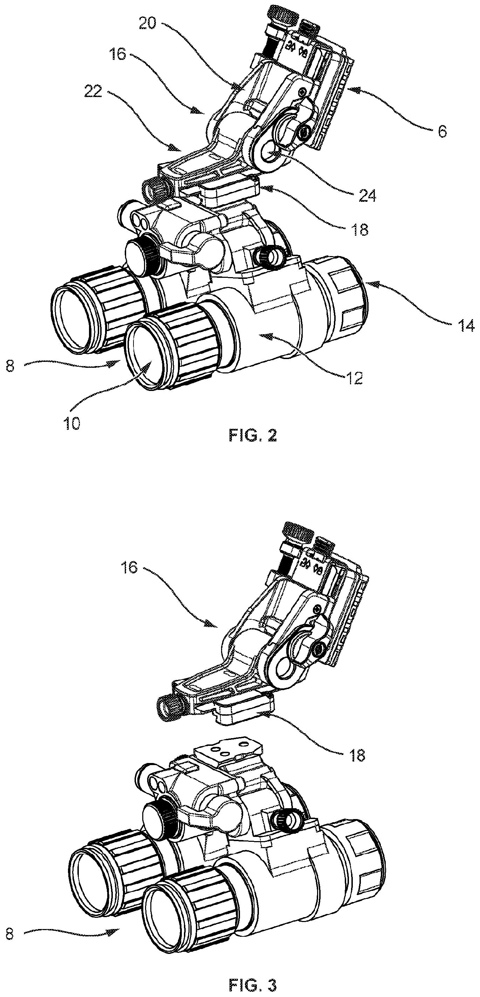

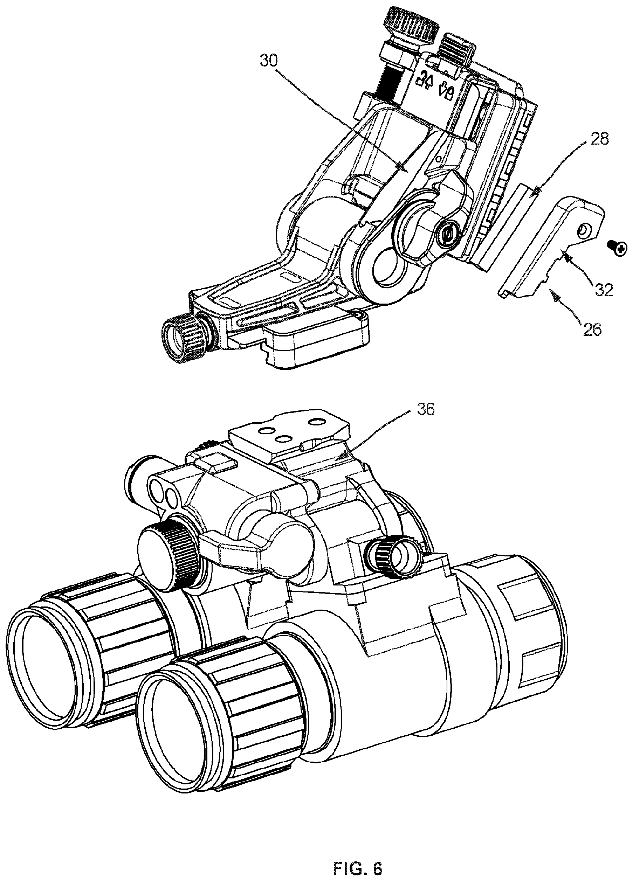

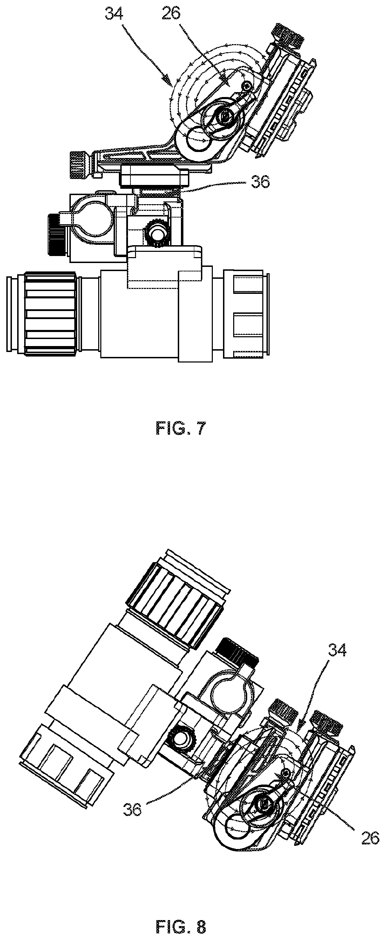

Referring now to **FIG. 2, 3****,** **4****,** **6****,** **7, 8****,** **9** and **10****,** the flip-up helmet mount includes a magnet module **26** located on the bracket member upper **20.** The magnet module **26** comprises a magnet **28** held in a magnet cavity **30** by a magnet cover **32** (**FIG. 6**). The magnet **28** emits a magnetic field **34** (**FIG. 7** and **8**).

The ENVG **8** also includes a magnetically-responsive sensor **36** inside the ENVG housing **12.** The magnetically-responsive sensor **36** removes electrical power to the ENVG **8** when a magnetic field **34** of sufficient strength is supplied to the magnetically-responsive sensor **36.** An automatic shutdown assembly is essential when using a flip-up helmet mount **2,** since, as best seen in **FIG. 5****,** should the user forget to turn off the night vision goggle before moving it to the stowed position, the phosphor yellow/green light emitted from the eye-pieces **14** would be visible to possibly hostile personnel in front of the user. The phosphor yellow/green light would appear as a pair of small spot lights and may be visible at great distances at night, indicating the position of the user of the night vision goggle to those in front of the user.

Accordingly, the flip-up helmet mount **2** includes an automatic shutdown assembly to provide the necessary magnetic field **34** to the magnetically-responsive sensor **36** when the night vision device **8** is in the stowed position, while at the same time ensuring that the magnetic field is removed from the magnetically-responsive sensor **36** when the night vision goggle **8** is pivoted to the in-use position.

One of the advantages of the automatic shutdown assembly provided for in the flip-up helmet mount **2** is that it is more reliable than the assemblies provided for in the prior art. This reliability of the shutdown assembly is due an understanding of the absolute position between the bracket member upper **20** and bracket member lower **22** and therefore operational mode of the ENVG **2.** Advantageously, the absolute position of the bracket member **16** is irrespective of the user's head position and is not altered by gravity or other outside circumstances.

When using the flip-up helmet mount **2,** the operator can adjust the position of the eye-pieces **14** in relation to the operator's eyes, to optimize the viewing conditions of the ENVG **8.** The magnet module **26** may also require some positional adjustment to ensure that the magnetically-responsive sensor **36** can optimally sense the magnetic field **34** produced by the magnet **28** when in the stowed position, and not when in the in-use position.

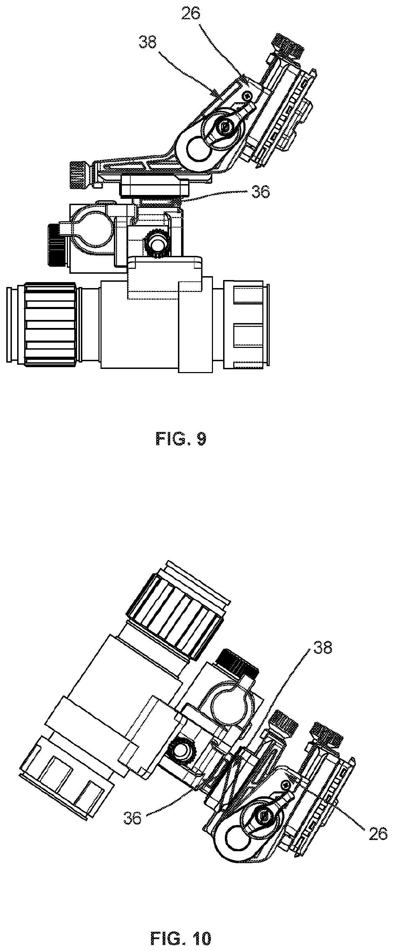

The magnet module **26** can be repositioned using a magnet adjustment assembly **38** as shown in **FIG. 9** and **10****.** The magnet adjustment assembly **38** can be geared or coupled with the bracket member hinge **24,** such that when the bracket member lower **22** is rotated towards the bracket member upper **20,** the magnet adjustment assembly **38** pivots towards the bracket member upper **20,** ensuring the magnet **28** is in proximity to the magnetically-responsive sensor **36.** Other adjustment methods can be utilised to adjust the proximity of the magnet **28** and magnetically-responsive sensor **36** when in the stowed and in-use positions, providing for optimisation of the magnetically controlled automatic shutdown of the ENVG.

Alternatively, the magnet module 26 can be positioned inside the ENVG housing **12** and the magnetically-responsive sensor **36** can be placed on the bracket member upper **20,** helmet block **6,** or helmet **4.**

### Multi Orientated Mounting System not forming part of the claimed invention

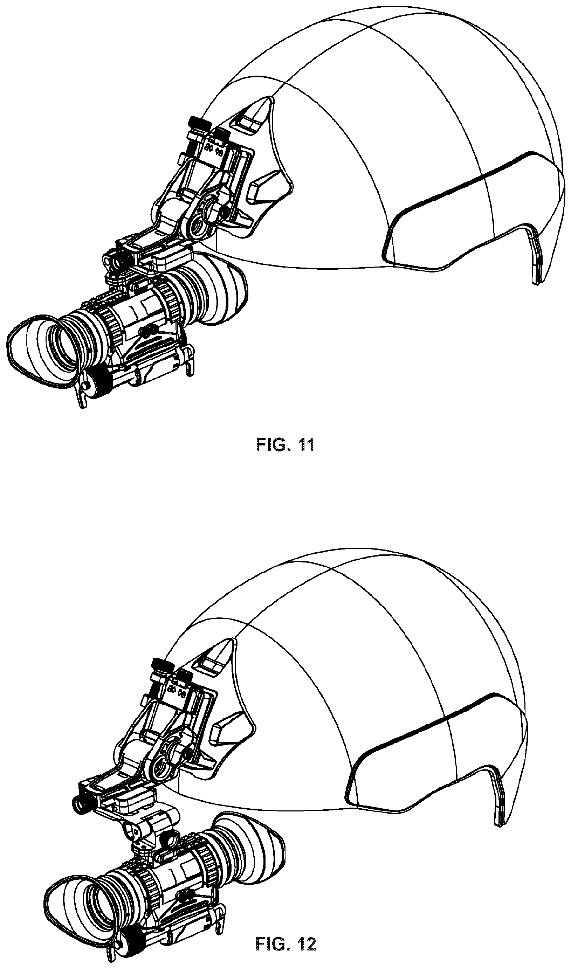

Referring now to **FIG. 11** and **12****,** an embodiment of a flip-up helmet mount **2** according to the present invention is show where only a single ENVG **8** is attached the flip-up helmet mount **2** providing a monocular system that provides an eye-piece **14** to only one of the operator's eyes.

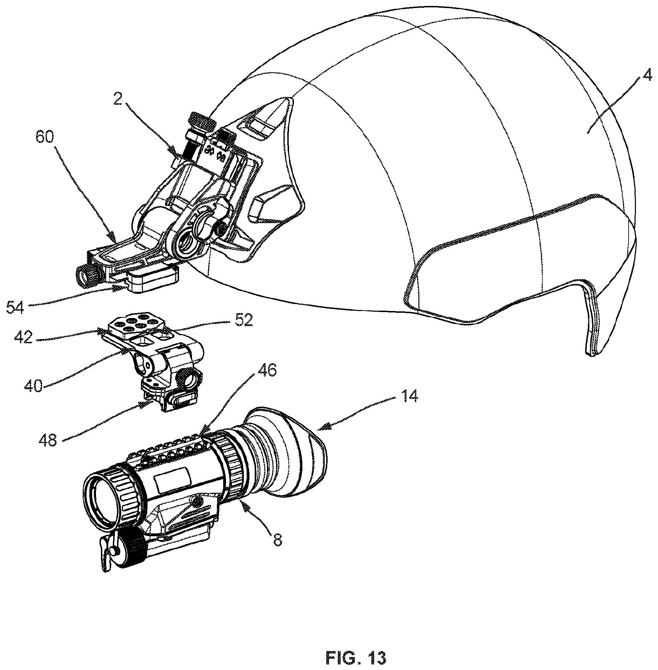

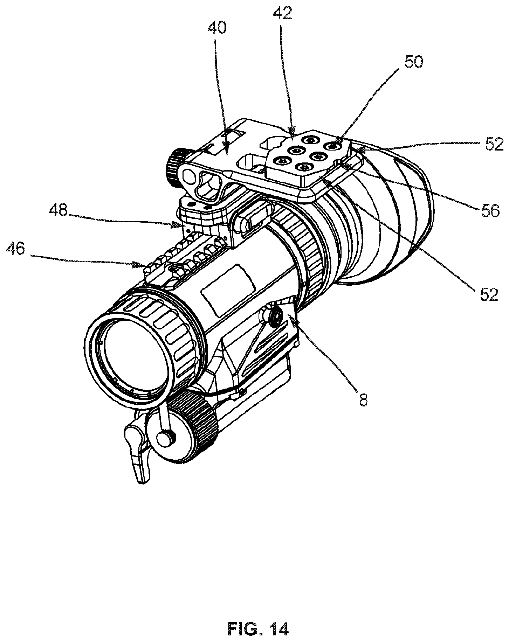

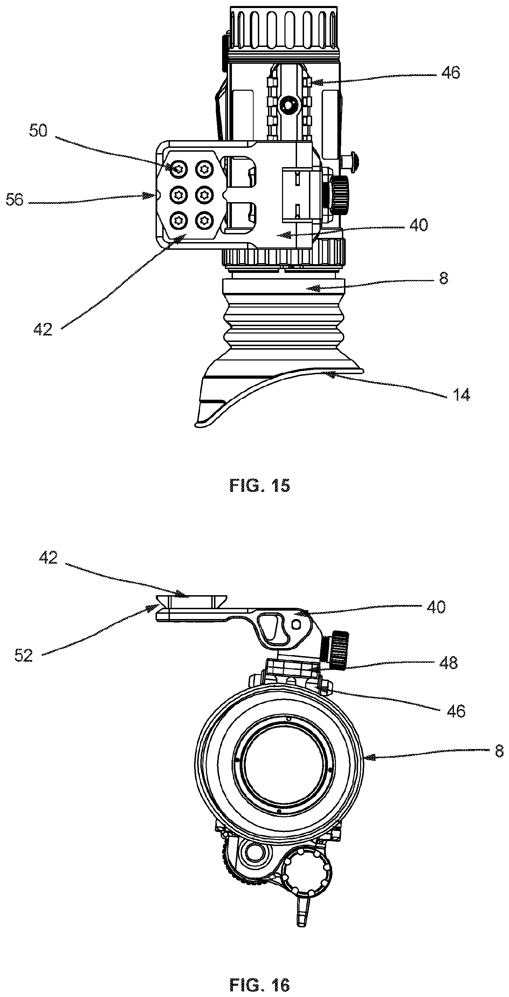

In the embodiments as shown in **FIG. 13** and **14****,** the ENVG **8** is removable from the carriage chassis **18** for storage purposes. As shown in **FIG. 13****,** **14****,** **15,** and **16****,** the ENVG **8** is attached to the carriage chassis **18** through a bridge assembly **40.** The bridge assembly **40** includes a slidable dovetail plate **42** that is received by the carriage chassis dovetail receiver slot **54** in the carriage chassis **18.** The ENVG **8** includes a Picatinny rail **46** which is a military standard rail interface system used by many manufacturers. The Picatinny rail **46** is received by a Picatinny clamp **48** located on the bridge assembly **40.**

The bridge assembly **40** can be removed from the carriage chassis **18** and rotated horizontally and re-attached to the carriage chassis **18** allowing the operator to swap the monocular ENVG system **8** from the left eye to the right eye and vice versa.

Similarly, the Picatinny rail **46** and Picatinny clamp **48** allow the operator to rotate the ENVG **8** horizontally and reattach it to the Picatinny clamp **48.** This ensures the eye-piece **14** is up against the operator's eye, irrespective of whether the bridge assembly **40** is positioned on the left or right side.

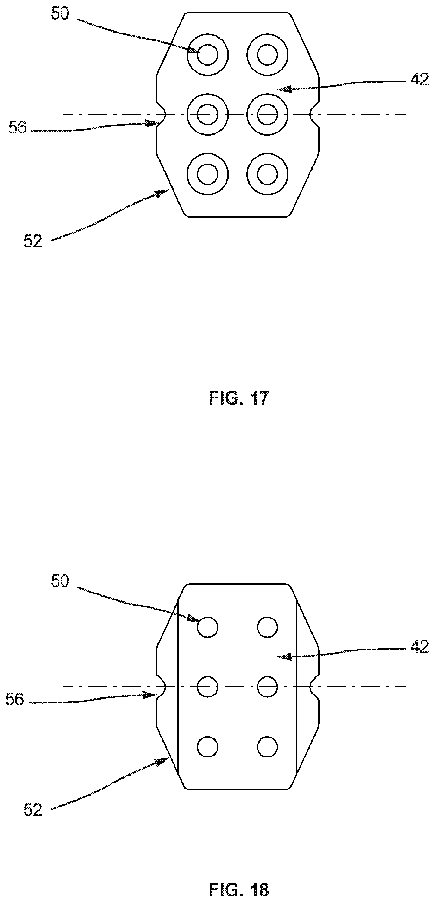

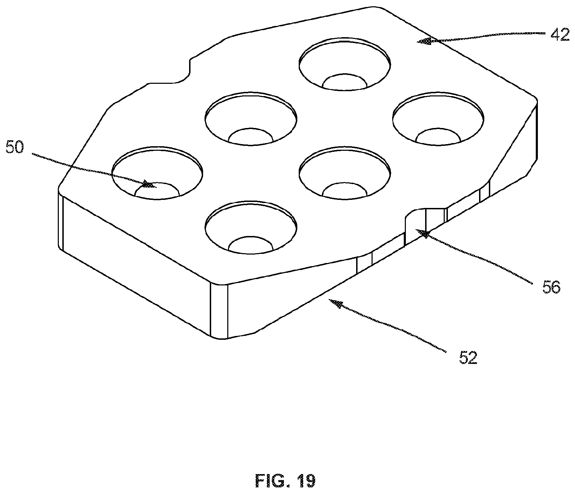

Turning now to **FIG. 13****,** **14****,** **15, 16****,** **17, 18** and **19****,** there is shown an embodiment wherein the ENVG **8** is secured to the slidable dovetail plate **42** through dovetail locating holes **50.** The slidable dovetail plate **42** includes several dovetail tapered faces **52** that interface with the carriage chassis dovetail receiver slot **54** ensuring the slidable dovetail plate **42** and attached ENVG **8** are secured firmly. This firm interface is important as it reduces the amount of movement of the ENVG **8** relative to the user's eye(s).

The slidable dovetail plate **42** includes a dovetail locking face **56.** In some embodiments this face is shared with the dovetail tapered face **52.** The carriage chassis dovetail receiver **44** includes a dovetail locking ball **58** (not shown) or similar mechanism that pushes against the dovetail locking face **56** and ensures the slidable dovetail plate **42** cannot be removed until the dovetail release button **60** (not shown) is actuated.

In a particular embodiment, the slidable dovetail plate **42** includes dovetail tapered faces **52** and dovetail locking face **56** which are symmetrical around the slidable dovetail plate's **42** midpoint. The symmetrical dovetail tapered faces **52** allow the slidable dovetail plate to be inserted into the carriage chassis dovetail receiver slot **54** from multiple directions allowing an operator to affix the ENVG **8** to the bridge assembly **40** in multiple orientations without the need to remove the slidable dovetail plate **42** from the ENVG **8.** The symmetrical dovetail locking face **56** allows the dovetail locking ball **58** (not shown) to secure the slidable dovetail plate **42** to the bridge assembly **40** from any orientation.

### Automatic Shut Down Assembly - Bowden cable

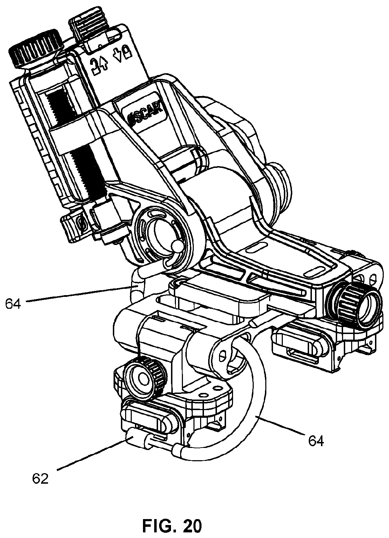

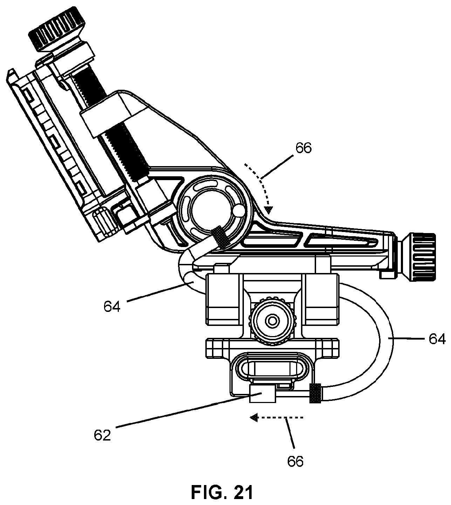

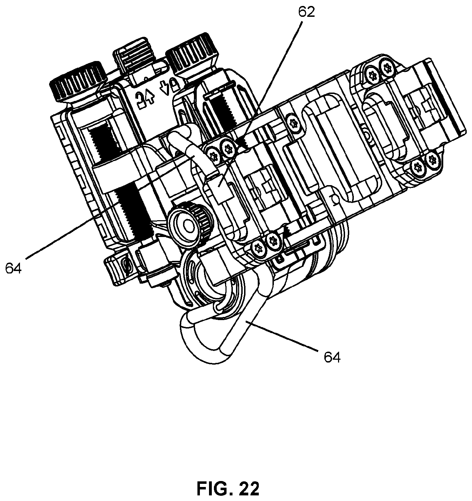

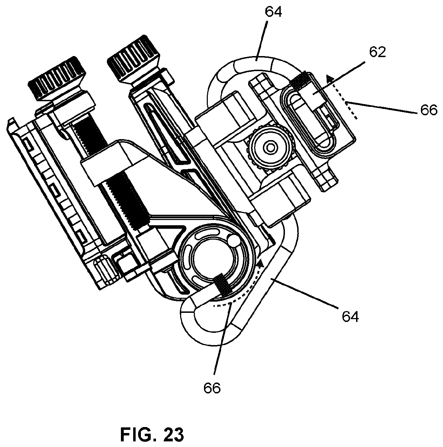

Referring now to **FIG. 20****,** **21****,** **22** and **23****,** the flip-up helmet mount includes a magnet **62** at one end of a Bowden cable **64** as part of an automatic shutdown assembly. Moving the ENVG from the in-use position of **FIG. 20** and **21** to the stowed position of **FIG. 22** and **23****,** as indicated by the dashed arrows 66 in **FIG. 21****,** results in activating shutdown of the ENVG. Dependent on where the magnetically-responsive sensor (not shown) is positioned relative to the magnet **62,** moving the ENVG to a stowed position either removes the magnet **62** from the magnetically-responsive sensor to activate shutdown of the ENVG, or positions the magnet within range of the magnetically-responsive sensor to activate shutdown of the ENVG.

Conversely, moving the ENVG from the stowed position of **FIG. 22** and **23** to the in-use position of **FIG. 20** and **21****,** as indicated by the dashed arrows **66** in **FIG. 23****,** results in activating shutdown of the ENVG. Dependent on where the magnetically-responsive sensor (not shown) is positioned relative to the magnet **62,** moving the ENVG to an in-use position either removes the magnet **62** from the magnetically-responsive sensor to activate the ENVG, or positions the magnet within range of the magnetically-responsive sensor to activate the ENVG.

Reference throughout this specification to 'one embodiment' or 'an embodiment' means that a particular feature, structure, or characteristic described in connection with the embodiment is included in at least one embodiment of the present invention. Thus, the appearance of the phrases 'in one embodiment' or 'in an embodiment' in various places throughout this specification are not necessarily all referring to the same embodiment. Furthermore, the particular features, structures, or characteristics may be combined in any suitable manner in one or more combinations.

In compliance with the statute, the invention has been described in language more or less specific to structural or methodical features. It is to be understood that the invention is not limited to specific features shown or described since the means herein described comprises preferred forms of putting the invention into effect. The invention is, therefore, claimed in any of its forms or modifications within the proper scope of the appended claims appropriately interpreted by those skilled in the art.

## Claims

1. A flip-up helmet mount (2) for an enhanced night vision goggle (ENVG) (8), comprising:
(i) a helmet block (6) adapted to secure the flip-up helmet mount (2) to a helmet;
(ii) a bracket member (16) coupled to the helmet block (6) and comprising an automatic shutoff mechanism;
(iii) a carriage chassis (18) coupled to the bracket member (16), wherein the carriage chassis (18) is adapted to receive an ENVG (8); and
(iv) a hinged pivot assembly associated with the carriage chassis (18);
wherein the bracket member (16) provides for rotational coupling between the carriage chassis (18) and the helmet block (6), wherein the hinged pivot assembly enables the ENVG (8) to be moved from a stowed position to an in-use position, wherein the automatic shutoff mechanism comprises a magnet module (26) and a magnetically-responsive sensor (36), and **characterised in that**
the magnetically-responsive sensor (36) is positioned adjacent to the magnet module (26), such that the ENVG (8) is switched off when the magnetically-responsive sensor (36) is under the influence of a sufficient magnetic field (34) from a magnet (28) associated with the magnet module (26), and the ENVG (8) is switched on when the magnetically-responsive sensor (36) is no longer under the influence of sufficient magnetic field (34) from a magnet (28) associated with the magnet module (26).

2. The flip-up helmet mount (2) of claim 1, wherein as the ENVG (8) is rotated between an in-use position and a stowed position, the magnetically-responsive sensor (36) is rotated, such that the magnet (28) provides sufficient magnetic field (34) required to turn the ENVG (8) off.

## Patentansprüche

1. Hochklappbare Helmbefestigung (2) für eine Nachtsichtverbesserungsbrille (ENVG) (8), die Folgendes umfasst:
(i) einen Helmblock (6), der dazu ausgelegt ist, die hochklappbare Helmbefestigung (2) an einem Helm zu sichern;
(ii) ein Halterungselement (16), das mit dem Helmblock (6) gekoppelt ist und einen automatischen Abschaltmechanismus umfasst;
(iii) ein Schlittenchassis (18), das mit dem Halterungselement (16) gekoppelt ist, wobei das Schlittenchassis (18) dazu ausgelegt ist, eine ENVG (8) aufzunehmen; und
(iv) eine angelenkte Schwenkanordnung, die dem Schlittenchassis (18) zugeordnet ist;
wobei das Halterungselement (16) eine Drehkopplung zwischen dem Schlittenchassis (18) und dem Helmblock (6) bereitstellt, wobei die angelenkte Schwenkanordnung ermöglicht, dass die ENVG (8) aus einer verstauten Position in eine Gebrauchsposition bewegt wird, wobei der automatische Abschaltmechanismus ein Magnetmodul (26) und einen magnetisch ansprechenden Sensor (36) umfasst, und **dadurch gekennzeichnet, dass**
der magnetisch ansprechende Sensor (36) angrenzend an das Magnetmodul (26) positioniert ist, so dass die ENVG (8) ausgeschaltet wird, wenn der magnetisch ansprechende Sensor (36) unter der Einwirkung eines ausreichenden Magnetfeldes (34) von einem dem Magnetmodul (26) zugeordneten Magneten (28) steht, und die ENVG (8) eingeschaltet wird, wenn der magnetisch ansprechende Sensor (36) nicht mehr unter der Einwirkung eines ausreichenden Magnetfeldes (34) von einem dem Magnetmodul (26) zugeordneten Magneten (28) steht.

2. Hochklappbare Helmbefestigung (2) nach Anspruch 1, wobei, wenn die ENVG (8) zwischen einer Gebrauchsposition und einer verstauten Position gedreht wird, der magnetisch ansprechende Sensor (36) gedreht wird, so dass der Magnet (28) ein ausreichendes Magnetfeld (34) bereitstellt, das erforderlich ist, um die ENVG (8) auszuschalten.

## Revendications

1. Support de casque rabattable (2) pour lunettes de vision nocturne améliorée (ENVG) (8), comprenant :
(i) un bloc de casque (6) adapté pour fixer le support de casque rabattable (2) à un casque ;
(ii) un élément de support (16) accouplé au bloc de casque (6) et comprenant un mécanisme de désactivation automatique ;
(iii) un châssis porteur (18) accouplé à l'élément de support (16), le châssis porteur (18) étant adapté pour recevoir des ENVG (8) ; et
(iv) un ensemble articulé à pivot associé au châssis porteur (18) ;
l'élément de support (16) assurant un accouplement rotatif entre le châssis porteur (18) et le bloc de casque (6), l'ensemble articulé à pivot permettant un déplacement des ENVG (8) d'une position de rangement à une position d'utilisation, le mécanisme de désactivation automatique comprenant un module à aimant (26) et un capteur magnétiquement sensible (36), et **caractérisé en ce que**
le capteur magnétiquement sensible (36) est positionné près du module à aimant (26), de sorte que les ENVG (8) soient désactivées lorsque le capteur magnétiquement sensible (36) est sous l'influence d'un champ magnétique suffisant (34), provenant d'un aimant (28) associé au module à aimant (26), et que les ENVG (8) soient activées lorsque le capteur magnétiquement sensible (36) n'est plus sous l'influence d'un champ magnétique suffisant (34), provenant d'un aimant (28) associé au module à aimant (26).

2. Support de casque rabattable (2) selon la revendication 1, dans lequel, lorsqu'une rotation est appliquée aux ENVG (8) entre une position d'utilisation et une position de rangement, une rotation est appliquée au capteur magnétiquement sensible (36), de sorte que l'aimant (28) fournisse un champ magnétique suffisant (34) nécessaire pour désactiver les ENVG (8).
